(19) Europäisches Patentamt
European Patent Office
Office européen des brevets

(11) **EP 3 745 638 A1**

(12) **DEMANDE DE BREVET EUROPEEN**

(43) Date de publication:
**02.12.2020 Bulletin 2020/49**

(51) Int Cl.:
*H04L 9/06* [(2006.01)] *H04L 9/00* [(2006.01)]

(21) Numéro de dépôt: **20176724.1**

(22) Date de dépôt: **27.05.2020**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **27.05.2019 FR 1905592**

(71) Demandeur: **Idemia Identity & Security France
92400 Courbevoie (FR)**

(72) Inventeurs:
• **CHABANNE, Hervé
92400 COURBEVOIE (FR)**
• **BATTISTELLO, Alberto
92400 COURBEVOIE (FR)**

(74) Mandataire: **Regimbeau
20, rue de Chazelles
75847 Paris Cedex 17 (FR)**

(54) **PROCEDES DE MISE EN ŒUVRE ET D'OBFUSCATION D'UN ALGORITHME CRYPTOGRAPHIQUE A CLE SECRETE DONNEE**

(57) La présente invention concerne un procédé de mise en oeuvre d'un algorithme cryptographique à clé secrète donnée comprenant l'exécution par des moyens de traitement de données (11a) d'un équipement (10a) d'un code implémentant ledit algorithme cryptographique stocké sur des moyens de stockage de données (12a) de l'équipement (10a), le procédé étant caractérisé en ce qu'au moins une partie dite obfusquée dudit code paramétrée avec ladite clé secrète n'utilise qu'une seule instruction dite *cmov,* qui est une instruction de déplacement conditionnel dans un premier opérande de l'instruction d'un deuxième opérande de l'instruction, au moins une occurrence de ladite instruction *cmov* dans ladite partie obfusquée du code étant factice.

Fig. 2

(a) Réécriture uniquement en instructions *mov*

(b) Remplacement des instructions *mov* par *cmov*

Ajout de *cmov* factices

(c) Chargement du troisième code Exécution

Premier code

**Description**

DOMAINE TECHNIQUE GENERAL

La présente invention concerne le domaine de la cryptographie, et en particulier un procédé de chiffrement/déchiffrement de type « boite blanche ».

ETAT DE L'ART

Une fonction est considérée comme une « boîte noire » lorsqu'on ne peut pas accéder à son fonctionnement interne, i.e. qu'on peut connaître ses entrées et ses sorties mais pas ses paramètres secrets ou ses états intermédiaire.
Les algorithmes cryptographiques (par exemple pour du chiffrement ou de la signature) sont ainsi classiquement supposés des boites noires lorsqu'on évalue leur fiabilité (résistance aux attaques).
Par exemple, si l'on prend les algorithmes cryptographiques typiques tels que DES (« Data Encryption Standard »), 3DES (Triple DES) ou AES (« Advanced Encryption Standard »), ceux-ci travaillent sur des blocs d'un taille 64 ou 128 bit (et demain 256 bit), mais ne peuvent en une seule opération traiter un tel bloc (il y a déjà plus de $10^{19}$ valeurs possibles de blocs de 64 bit). Il est ainsi nécessaire de travailler au sein d'un bloc sur des éléments plus petits, typiquement de taille 8 bit (seulement 256 possibilités) en enchainant des opérations non-linéaires avec des opérations linéaires.
L'hypothèse de boite noire suppose dans ce cas que les clés ou les états intermédiaires sont inaccessibles. Cette hypothèse impose une contrainte forte sur le stockage et la manipulation de ces paramètres. En effet, des outils ont été récemment publiés pour permettre l'automatisation d'attaques sur implémentation matérielle, attaques dites par canaux auxiliaires ou par fautes.
Aujourd'hui, pour de nombreux cas d'usages incluant le paiement sur mobile, il est nécessaire de déployer des algorithmes cryptographiques en faisant le moins d'hypothèses possibles sur la sécurité du matériel cible. Le stockage et la manipulation sécurisés des paramètres secrets doivent alors être assurés au niveau applicatif.
La cryptographie dite boite blanche vise à répondre à ce défi en proposant des implémentations des algorithmes cryptographiques qui sont sensés rendre l'extraction des secrets impossible, même en cas d'attaque permettant à l'attaquant un accès complet à l'implémentation logicielle de l'algorithme. Plus précisément, une fonction est considérée comme une « boîte blanche » lorsque ses mécanismes sont visibles. En d'autres termes, on fait directement l'hypothèse que l'attaquant a accès à tout ce qu'il souhaite (le binaire est complètement visible et modifiable par l'attaquant et celui-ci a le plein contrôle de la plateforme d'exécution). Par conséquent, l'implémentation elle-même est la seule ligne de défense.
La résistance des produits développés repose sur un mélange de principes mathématiques et d'obfuscation logicielle. Il a par exemple été proposé de « masquer » les états internes par des permutations aléatoires (inconnues mais constantes) appelées encodages internes. Cependant, la résistance des protections s'appuyant uniquement sur des principes mathématiques n'apparait pas aujourd'hui suffisante, cf. *Brecht Wyseur Software Security: White-Box Cryptography. PhD Thesis 2009.*
En outre, il a été montré dans les articles *Joppe W. Bos, Charles Hubain, Wil Michiels, Philippe Teuwen: Differential Computation Analysis: Hiding Your White-Box Designs is Not Enough, CHES2016, Sanfelix, Eloi, Cristofaro Mune, and Job de Haas. "Unboxing the white-box." Black Hat EU 2015. 2015,* et *Jacob, M., Boneh, D., & Felten, E. (2002, November). Attacking an obfuscated cipher by injecting faults. In ACM Workshop on Digital Rights Management (pp. 16-31). Springer, Berlin, Heidelberg,* que les attaques dites par canaux auxiliaires ou par fautes peuvent être transposées avec succès dans la cryptographie boite blanche.
Il serait par conséquent souhaitable de disposer d'une nouvelle solution de cryptographie « boite blanche » utilisant les mécanismes standards comme le DES et l'AES qui soit complètement résistante à toutes attaques connues (par analyse de canaux, par faute, etc.).

PRESENTATION DE L'INVENTION

Selon un premier aspect, la présente invention concerne un procédé de mise en œuvre d'un algorithme cryptographique à clé secrète donnée comprenant l'exécution par des moyens de traitement de données d'un équipement d'un code implémentant ledit algorithme cryptographique stocké sur des moyens de stockage de données de l'équipement, le procédé étant caractérisé en ce qu'au moins une partie dite obfusquée dudit code paramétrée avec ladite clé secrète n'utilise qu'une seule instruction dite *cmov,* qui est une instruction de déplacement conditionnel dans un premier opérande de l'instruction d'un deuxième opérande de l'instruction, au moins une occurrence de ladite instruction *cmov* dans ladite partie obfusquée du code étant factice.
Selon des caractéristiques avantageuses et non limitatives :

ladite instruction *cmov* de déplacement conditionnel dans un premier opérande de l'instruction d'un deuxième opérande de l'instruction met en œuvre :

- soit, si une condition est vérifiée, le déplacement effectif dans le premier opérande du deuxième opérande ;
- soit, si ladite condition n'est pas vérifiée, une simulation de déplacement dans le premier opérande du deuxième opérande ;

ladite occurrence factice de l'instruction *cmov* étant destinée à mettre en œuvre ladite simulation de déplacement dans le premier opérande du deuxième opérande lors de l'exécution normale dudit code ;
ladite simulation de déplacement dans le premier opérande du deuxième opérande comprend soit le déplacement effectif dans le premier opérande du premier opérande, soit le déplacement effectif du deuxième opérande ailleurs que dans le premier opérande ;
chaque instruction *cmov* de déplacement conditionnel dans un premier opérande de l'instruction d'un deuxième opérande de l'instruction est exprimée à partir d'une instruction dite *mov* de déplacement non-conditionnel dans le premier opérande du deuxième opérande, encapsulée ;
les moyens de traitement de données mettent en œuvre un environnement d'exécution sécurisée dans lequel ledit code implémentant ledit algorithme cryptographique est exécuté, tel que l'environnement Secure Guard Extension ;
ladite partie de code obfusquée comprend une pluralité d'occurrences factices d'instructions *cmov* pour chaque occurrence réelle d'une instruction *cmov* ;
pour un ensemble d'une occurrence réelle et des M-1 occurrences factices correspondantes d'instructions *cmov*, correspondant à toutes les M valeurs possibles *oi* d'un objet noté *o*, dont une valeur attendue *r*, on a :

- pour la i-ème occurrence de l'ensemble, la condition de déplacement est « *o* est égal à *oi* » ;
- l'occurence réelle est la j-ième telle que *oj=r* ;
- toutes les autres occurrences de l'ensemble sont des occurrences factices ;

ledit code est dans un langage d'assemblage des moyens de traitement de données ;
ledit langage d'assemblage est l'assembleur x86 ;
ledit algorithme cryptographique est un algorithme de chiffrement symétrique, ladite partie obfusquée du code implémentant au moins un tour dudit algorithme de chiffrement symétrique.

Selon un deuxième aspect, l'invention concerne un procédé d'obfuscation d'un algorithme cryptographique à clé secrète donnée représentée par un premier code informatique, comprenant la mise en œuvre par des moyens de traitement de données d'un serveur d'étapes de :

(a) réécriture du premier code en un deuxième code dans lequel au moins une partie dite obfusquée dudit code utilisant ladite clé secrète n'utilise qu'une seule instruction dite *mov*, qui est une instruction de déplacement non-conditionnelle dans un premier opérande de l'instruction d'un deuxième opérande de l'instruction ;
(b) génération d'un troisième code correspondant au deuxième code dans lequel chaque instruction *mov* de la partie obfusquée est remplacée par une instruction dite *cmov*, qui est une instruction de déplacement conditionnel dans un premier opérande de l'instruction d'un deuxième opérande de l'instruction, au moins une instruction *cmov* factice étant ajoutée.

Selon des caractéristiques avantageuses mais non limitatives, le procédé comprend une étape (c) de transmission à l'équipement du troisième pour stockage sur des moyens de stockage d'un équipement en vue de l'exécution par des moyens de traitement de données de l'équipement pour mise en œuvre dudit algorithme cryptographique.
Selon un troisième et un quatrième aspect, l'invention concerne un produit programme d'ordinateur comprenant des instructions de code pour l'exécution d'un procédé selon le premier aspect ou selon le deuxième aspect de mise en œuvre ou d'obfuscation d'un algorithme cryptographique à clé secrète donnée ; et un moyen de stockage lisible par un équipement informatique sur lequel un produit programme d'ordinateur comprend des instructions de code pour l'exécution d'un procédé selon le premier aspect ou selon le deuxième aspect de mise en œuvre d'obfuscation d'un algorithme cryptographique à clé secrète donnée.

PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

- la figure 1 est un schéma d'une architecture pour la mise en œuvre des procédés selon l'invention ;
- la figure 2 illustre un mode de réalisation d'un procédé d'obfuscation selon l'invention.

DESCRIPTION DETAILLEE

*Architecture*

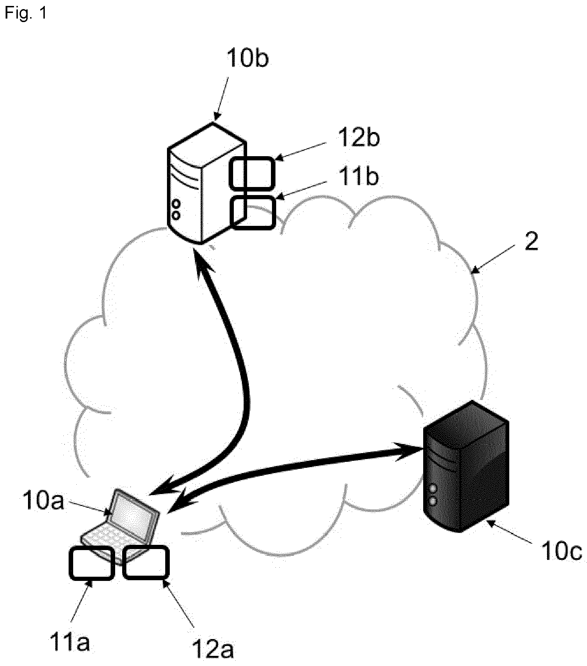

En référence à la **figure 1,** sont proposés un procédé de mise en œuvre d'un algorithme cryptographique « boite blanche » mis en œuvre au sein d'un équipement 10a tel qu'un terminal mobile (smartphone, tablette tactile, etc.), i.e. un équipement ne disposant pas particulièrement d'un matériel sécurisé et qui peut faire l'objet d'attaques sur implémentation matérielle, et pour lequel l'approche boite blanche prend tout son intérêt ; ainsi qu'un procédé d'obfuscation de l'algorithme cryptographique permettant cette implémentation boite blanche.

L'équipement 10a comprend des moyens de traitement de données 11a (un processeur) et des moyens de stockage de données 12a (une mémoire, par exemple flash).

L'équipement 10a est par exemple relié à un serveur 10b par exemple via le réseau internet 20. Il peut être amené à recevoir depuis ce serveur 10b (par exemple celui d'un fournisseur de solutions de sécurité) des morceaux de code (qu'on décrira plus loin) contenant des secrets qui vont être stockées dans la mémoire 12a et utilisées pour la mise en œuvre du présent procédé L'équipement 10a peut lui-même être connecté à d'autres serveurs 10c de tiers avec lesquels il pourra échanger des données chiffrées au moyen du présent procédé.

*Procédé cryptographique*

Le procédé selon le premier aspect est un procédé de mise en œuvre d'un algorithme cryptographique, en particulier un procédé de « chiffrement ou de déchiffrement », cela signifie qu'il permet selon les cas de chiffrer des données ou d'en déchiffrer. Il est ainsi notamment de type symétrique, ou « à clé secrète », ou de type asymétrique (par exemple un algorithme de signature, pour lequel les tiers disposent d'une clé publique).

On comprendra que le présent procédé est une nouvelle implémentation d'algorithmes connus, tels que 3DES ou AES qui sont les standards actuels. Plus précisément, il ne propose pas une nouvelle stratégie de chiffrement, mais seulement une nouvelle implémentation de l'algorithme, et ainsi une nouvelle façon de manipuler les données au sein de l'algorithme qui soit résistante à toutes les attaques en « boite blanche ». Ainsi, le présent procédé comprenant classiquement l'exécution par les moyens de traitement de données 11a de l'équipement 10a d'un code implémentant de manière obfusquée (pour au moins une partie du code dite partie obfusquée) ladite fonction cryptographique stocké sur les moyens de stockage de données 12a. Ledit code est préférentiellement dans un langage directement interprétable par les moyens de données 11a, dit langage d'assemblage. Par exemple les processeurs de la famille x86 (qui constituent la grande majorité des processeurs aujourd'hui en service) reconnaissent un langage d'assemblage x86 utilisant un jeu d'instructions x86. Dans la suite de la présente description, on prendra l'exemple de x86.

Par « obfuscation », on entend ici le fait de rendre « illisible ou incompréhensible » le code informatique pour prévenir de façon générale le reverse engineering et notamment prévenir l'accès à l'algorithme et ses clés. On notera que le code de tout l'algorithme n'a pas nécessairement besoin d'être intégralement obfusqué de la façon qui va être décrite, il suffit en pratique que des parties dites « sensibles » le soient, en particulier celles représentatives des opérations paramétrées avec ladite clé secrète, et tout particulièrement celles comprenant l'application de fonctions de substitution. Plus précisément, selon un schéma classique, l'algorithme mis en œuvre traite les données blocs par bloc, et au sein d'un bloc il manipule des éléments d'une taille plus petite, par exemple 16 éléments d'un octet pour un bloc 128 bits (cas de AES par exemple). Ces éléments sont manipulés typiquement deux par deux.

Ainsi le présent procédé préférentiellement chiffre ou déchiffre un n-uplet de données $\{a_i\}_{i<n}$ avec un n-uplet de clés secrètes $\{k_i\}_{i<n}$ prédéterminées. Chaque élément $a_i$ dudit n-uplet de données $\{a_i\}_{i<n}$ est à valeur dans un espace $\{0;1\}^k$ qu'on notera $\mathbb{F}_2^k$ et a avantageusement une taille d'un octet (un « byte » de 8 bits, i.e. $k=8$).

Pour traiter un bloc complet à partir d'éléments plus petits, il est nécessaire de multiplier les opérations au sein du bloc, et pour cela le présent procédé comprenant avantageusement de façon classique l'utilisation d'une fonction non-linéaire de substitution $f$, combinée à l'utilisation d'une fonction linéaire de multiplexage $L$, chacune donnée en fonction de l'algorithme cryptographique à implémenter.

La fonction de substitution $f$ est une fonction paramétrée avec une clé secrète $k_i$ qui prend en entrée un élément d'entrée de $\mathbb{F}_2^k$ et génère en sortie un élément de sortie de la même taille (i.e. de $\mathbb{F}_2^k$). Ces fonctions sont bien connues, et par exemple dans le cas de DES et AES la fonction $f$ est souvent tabulée et alors appelée boite S (« S-box »).

L'algorithme comprend typiquement l'alternance d'un étage d'utilisation de $f$ pour permuter des éléments puis d'un étage d'utilisation de *L* pour diffuser les données, et ce jusqu'à avoir traité tout le bloc, c'est ce que l'on appelle un tour (ou « round ») de l'algorithme. On comprend ainsi que le présent procédé comprend avantageusement la répétition de cette de sorte à chiffrer ou déchiffrer un ensemble de données comprenant celles dudit n-uplet $\{a_i\}_{i<n}$. Les parties sensibles qui vont être obfusquées conformément à ce qui va être décrit peuvent être limitées notamment aux premiers et/ou aux derniers tours (par exemple les trois premiers/derniers dans AES), en d'autres termes les applications dans les premiers et/ou derniers tours des fonctions de substitution utilisant ladite clé secrète.

A noter qu'il existe des attaques qui ne ciblent que les tours du milieu, il est donc possible d'obfusquer les parties correspondant à tous les tours si l'on souhaite totalement se protéger.

A noter également que, protéger seulement la fonction de substitution n'est pas toujours suffisant, il peut être intéressant de protéger la donnée sensible a travers toutes les opérations jusqu'au moment où elle dépend de trop de bits de clé pour qu'une attaque soit possible. Par exemple, pour AES, cela correspond à aller jusqu'au « mix colonnes » du deuxième tour.

*Principe de l'invention*

Le présent procédé se distingue en ce que l'au moins une partie dite obfusquée dudit code n'utilise qu'une seule instruction dite *cmov,* qui est une instruction de déplacement conditionnel dans un premier opérande de l'instruction d'un deuxième opérande de l'instruction, au moins une occurrence de ladite instruction *cmov* dans ladite partie obfusquée du code étant factice.

Plus précisément, ladite partie obfusquée est constitué d'une pluralité d'instruction, chacune étant une instruction *cmov,* i.e. il n'y a pas d'autres instructions que des instructions *cmov.* Naturellement, deux instructions *cmov* de ladite partie ne seront pas identiques, elles pourront avoir des opérandes (i.e. des arguments, paramètres) différents. On note que chaque opérande peut être un registre, une adresse mémoire, une valeur littérale ou une étiquette, et dans le cas typique il s'agit de deux registres de sorte que le déplacement consiste en l'écriture du contenu du registre désigné par le deuxième opérande dans le registre désigné par le premier opérande.

L'instruction *cmov* de déplacement conditionnel s'entend par comparaison avec une instruction traditionnelle (en particulier du set d'instruction x86) dite *mov* de déplacement non-conditionnel dans le premier opérande du deuxième opérande de l'instruction, i.e. juste de déplacement.

En effet, *cmov* met en œuvre le déplacement si et seulement si une condition est vérifiée, alors que *mov* le met toujours en œuvre. Typiquement cette condition est la valeur d'un booléen appelé « flag ».

Avantageusement, l'instruction *cmov* met plus précisément en œuvre :

- soit, si la condition est vérifiée, le déplacement effectif dans le premier opérande du deuxième opérande (i.e. l'instruction *mov* normale) ;
- soit, si la condition n'est pas vérifiée, une simulation de déplacement dans le premier opérande du deuxième opérande.

L'idée est qu'un attaquant ayant accès au matériel ne puisse pas faire la différence entre les deux branches de l'instruction, i.e. ne puisse pas dire si le déplacement a été effectivement effectué.

La simulation comprend ainsi avantageusement comme un vrai déplacement un accès mémoire et une écriture mémoire, mais naturellement la simulation ne comprend pas le déplacement effectif dans le premier opérande du deuxième opérande.

Notamment, la destination (le premier opérande) sera accédée mais y sera copié son contenu actuel au lieu du deuxième opérande. On peut ainsi d'une certaine façon voir la simulation de déplacement dans le premier opérande du deuxième opérande comme un déplacement dans le premier opérande du premier opérande (ce qui laisse la mémoire en l'état). Alternativement, la simulation peut comprendre le déplacement vers une autre destination qui ne sera pas utilisée, i.e. voir la simulation de déplacement dans le premier opérande du deuxième opérande comme un déplacement du deuxième opérande ailleurs que dans le premier opérande.

A noter que l'instruction *cmov,* peut soit exister nativement dans le set d'instructions reconnu par les moyens de traitement de données (à noter que ce n'est pas le cas dans le set d'instructions x86 originales, mais des versions plus récentes la comprennent. On note que le set d'instructions originale comprend une instruction *cmovz* pour « conditional move if zero » qui est conditionnelle mais n'a pas la condition en paramètre : plus précisément, le déplacement est effectué si un indicateur de zéro (Zero Flag, ZF) a pour valeur 1), soit être obtenue grâce à un « wrapper » (encapsulation) utilisant les instructions de base. Plus précisément, une instruction *mov* de base est encapsulée dans le wrapper.

Notamment, on pourra par exemple utiliser le wrapper en instructions x86 originales (utilisant l'instruction *cmovz*) suivant, proposé dans le document *Ashay Rane, Calvin Lin, Mohit Tiwari: Raccoon: Closing Digital Side-Channels through Obfuscated Execution. USENIX Security Symposium 2015* :

```
01:    cmov(uint8_t pred,uint32_t t_val,uint32_t f_val){
02:        uint32_t result;
03:        __asm__ volatile (
04:            "mov    %2, %0;"
05:            "test   %1, %1;"
06:            "cmovz  %3, %0;"
07:            "test   %2, %2;"
08:            : "=r" (result)
09:            : "r" (pred),"r" (t_val),"r" (f_val)
10:            : "cc"
11:        );
12:        return result;
13:    }
```

La petite taille du code de ce wrapper permet d'inspecter minutieusement chaque instruction pour détecter d'éventuelles fuites d'informations. Étant donné que le code agit uniquement sur les registres du processeur et n'accède jamais à la mémoire, il peut fonctionner dans les limites d'une zone sécurisée du processeur. La condition secrète est chargée dans le registre %1. L'instruction *mov* de la ligne 4 initialise le registre de destination avec t_val. L'instruction de test à la ligne 5 vérifie si pred est égal à zéro et met à jour un indicateur de zéro (Zero Flag, ZF), un indicateur de signe (Sign Flag, SF) et un indicateur de parité (Parity Flag, PF) pour refléter la comparaison. L'instruction *cmovz* suivante copie la valeur f_val dans le registre de destination uniquement si pred est égal à zéro. À ce stade, ZF, SF et PF contiennent toujours les résultats de la comparaison. L'instruction de test à la ligne 7 écrase ces indicateurs en comparant des valeurs non secrètes connues.

L'utilisation de l'instruction *cmov* a été décrite dans le document *Adil Ahmad, Byunggill Joe, Yuan Xiao, Yinqian Zhang, Insik Shin, and Byoungyoung Lee, OBFSCURO: A Commodity Obfuscation Engine on Intel SGX, NDSS 2019,* auquel l'homme du métier pourra se reporter (voir également *Adil Ahmad, Kyungtae Kim, Muhammad Ihsanulhaq Sarfaraz, Byoungyoung Lee: OBLIVIATE: A Data Oblivious Filesystem for Intel SGX. NDSS 2018*) comme solution aux failles de l'environnement SGX (Secure Guard Extensions).

Plus précisément, SGX propose d'attribuer des régions de mémoire privées (appelées enclaves sécurisée), dont le contenu est protégé et inaccessible en lecture ou écriture, y compris par des processus exécutés à des niveaux de privilèges supérieurs, i.e. d'avoir un espace où peuvent s'exécuter des programmes à l'abri en confidentialité et en intégrité, en particulier, à l'abri de l'OS, en vue d'y implémenter en toute sécurité des algorithmes sensibles. On peut voir l'enclave comme une « sandbox inversée », autorisant une implémentation boite noire plus robuste. En d'autres termes, on comprend que SGX n'offre en soi aucune protection boite blanche : les programmes qui sont exécutés dans l'enclave sont généralement écrits de façon ordinaire, avec des clés et des états internes accessibles, la protection étant assurée par le caractère étanche de l'enclave.

Et de surcroit, cette architecture s'est avérée susceptible d'être attaquée de nombreuses façons, par exemple par des attaques par canaux auxiliaires (fuites, cache attack, sur les motifs d'accès aux données) ou par des attaques type Spectre.

Les solutions OBLIVIATE/OBFSCURO visent à corriger certaines de ces vulnérabilités en ajoutant de l'« obliviousness », c'est-à-dire le fait de ne pas laisser de traces (par exemple le cache) qui pourraient être repérées par les attaques par canaux auxiliaires. Pour cela, le recours à des algorithmes type Oblivious RAM (*E. Stefanov, M. Van Dijk, E. Shi, C. Fletcher, L. Ren, X. Yu, and S. Devadas, "Path oram: an extremely simple oblivious ram protocol, " in Proceedings of the 20th ACM Conference on Computer and Communications Security (CCS), Berlin, Germany, Oct. 2013*) permettant de cacher les accès à une ressource, combinés aux instructions *cmov,* est proposé.

OBFSCURO parvient ainsi à prévenir certaines attaques par canaux auxiliaires, en l'espèce celles par timing ou par cache.

Cependant, on constate que de nombreuses autres attaques par canaux auxiliaires restent possibles, en particulier les attaques par consommation, émanations électromagnétiques, fautes, et de manière générale les attaques possibles dès que l'on a un accès intégral au matériel.

En d'autres termes, si OBFSCURO est efficace dans le cas d'algorithmes cryptographiques implémentés sur un équipement distant tel qu'un serveur, ce n'est pas le cas pour un équipement 10a de type terminal mobile.

L'idée à la base du présent procédé est que tout code informatique peut n'être écrit QUE en utilisant l'instruction *cmov,* et de là de résoudre les limitations d'OBFSCURO.

En effet, il a été démontré que l'instruction (non-conditionnelle) *mov* est Turing-complète, et donc que l'on peut réécrire tout code entièrement à partir de l'instruction *mov.*

Il existe notamment le compilateur M/o/Vfuscator qui prend en entrée du code x86 et le récrit en utilisant uniquement l'instruction *mov.* Naturellement le code obtenu est inutilement long et complexe et de ce fait obfusqué. On note qu'en moyenne la taille du fichier de code est multipliée par 35 par la réécriture.

A partir de là, le même code écrit cette fois-ci avec des instructions *cmov* au lieu de *mov* devient inattaquable, y compris en cas de matériel accessible et donc en environnement boite blanche, car chaque instruction du code est intraçable du fait du caractère conditionnel.

Naturellement, il faut qu'au moins une occurrence de ladite instruction *cmov* dans ladite partie obfusquée du code soit factice. Par « factice », on entend telle que la condition n'est vraie durant l'exécution normale dudit code, et donc que le déplacement défini par cette instruction n'est pas destiné à être mis en œuvre. On parle également d'instruction leurre dans le sens où elle n'est là que pour tromper un attaquant et non pour contribuer à l'algorithme. En d'autres termes, si le déplacement indiqué par cette instruction était réellement effectué, l'exécution entrainerait une erreur.

Plus précisément, supposons que le code puisse être écrit avec $N$ instructions *mov,* si seules $N$ instructions *cmov* sont utilisées c'est que la condition est vraie tout le temps et qu'aucune ne simule de déplacement. Si on utilise $N'>N$ instructions *cmov,* alors même en sachant qu'il n'y a que $N$ instructions qui sont réellement à mettre en œuvre, un attaquant ne saurait pas lesquelles elles sont et ne pourrait les distinguer des $N'-N>0$ instructions factices.

Dans le mode de réalisation préféré où chaque instruction *cmov* déclenche un déplacement réel ou une simulation, l'instruction factice est destinée à mettre en œuvre une simulation de déplacement dans le premier opérande du deuxième opérande.

En résumé, lors de l'exécution de la partie obfusquée chaque instruction *cmov* sera exécutée, qu'elle soit réelle ou factice, mais seule l'exécution des *cmov* réelles donnera lieu à un déplacement effectif et correct (l'exécution des *cmov* factices donnant lieu soit à un faux déplacement, soit à un déplacement incorrect)

Selon un premier mode de réalisation, on pourra exécuter le code obfusqué dans un environnement d'exécution sécurisée tel que SGX en utilisant par exemple pour chaque *cmov* le wrapper tel que défini précédemment.

Si l'on souhaite un environnement intégralement boite blanche (i.e. exécuté de manière conventionnelle et non-sécurisée sur tout processeur), selon un deuxième mode de réalisation on pourra utiliser un wrapper inspiré de ce qui est décrit dans le document *Emmanuel Prouff, Matthieu Rivain: A Generic Method for Secure SBox Implementation. WISA 2007.* Ce document propose une implémentation d'une S-Box dans laquelle on considère toutes les valeurs possibles de 0 à $2^k$-1 (en supposant la S-Box à valeurs dans $\mathbb{F}_2^k$ ) d'un objet qui sont toutes fausses sauf une. On peut étendre ce principe aux instructions *cmov* : chaque instruction *mov* est dupliquée en une pluralité d'instructions cmov dont une « vraie » et le reste factice. En d'autres termes, en supposant que le code puisse être écrit avec $N$ instructions *mov* et que l'on a $M$ valeurs possibles d'un objet, on utilise $N{\times}M$ instructions *cmov* dont $N$ instructions réelles et $N{\times}(M-1)$ factices. Plus précisément, pour un ensemble d'instructions $cmov_i, i<M$ ($cmov_i$ désignant la i-ème instruction cmov de l'ensemble) « associées » dont une réelle et $M-1$ factices, correspondant à toutes les M valeurs possibles $o_i$ d'un objet noté $o$, dont une valeur attendue $r$, on a :

- pour chaque $cmov_i,$ la condition est « $o$ est égal à $o_i$ » ;
- l'instruction réelle est $cmov_j$ telle que $o_j=r$ ;
- toutes les autres $cmov_i$ (i.e. $o_i{\neq}r$) sont des instructions factices.

A ce titre, l'homme du métier pourra utiliser comme wrapper l'un des algorithmes de ce document *Emmanuel Prouff, Matthieu Rivain: A Generic Method for Secure SBox Implementation. WISA 2007.*

Alternativement ou en complément, pour être sur de pouvoir contrer un adversaire voulant fauter l'exécution, on peut utiliser des techniques de duplications en implémentant des threads d'exécution parallèle des différentes instructions *cmov* alternatives (réelles ou factices, en particulier d'exécution simultanée des $M$ instructions *cmov* correspondant aux $M$ différentes valeurs d'un objet), voir le document *Oscar Reparaz, Lauren De Meyer, Begül Bilgin, Victor Arribas, Svetla Nikova, Ventzislav Nikov, Nigel P. Smart: CAPA: The Spirit of Beaver Against Physical Attacks. CRYPTO (1) 2018.* En combinant toutes ces techniques d'obfuscation, et en prenant $M=2^8=256$ on note que la taille du code d'origine implémentant l'algorithme cryptographique est typiquement multipliée par au moins 10000. Sachant que chacune des instructions peut être aussi bien réelle que factice, on comprend qu'il n'est plus possible par aucune attaque par canal auxiliaire que ce soit d'identifier d'information exploitable.

*Procédé d'obfuscation*

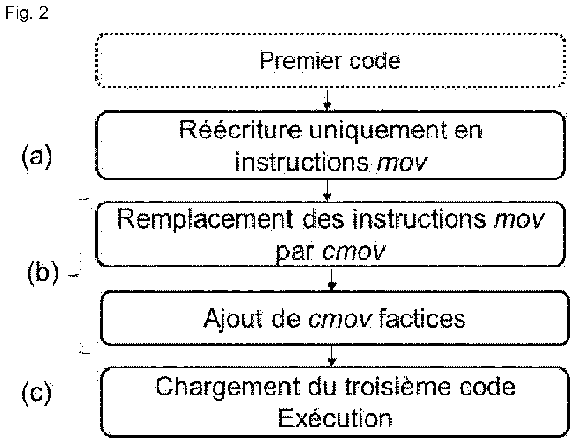

Selon un deuxième aspect, et en référence à la **figure 2,** est proposé un procédé d'obfuscation d'un algorithme cryptographique à clé secrète donnée représentée par un premier code informatique, i.e. un procédé d'obtention dudit code obfusqué (qui sera désigné comme troisième code) pour la mise en œuvre de l'algorithme, conformément au premier aspect. Le premier code est typiquement le code en langage d'assemblage tel qu'écrit directement ou compilé depuis un langage de programmation classique, i.e. non-obfusqué et utilisant des instructions variées.

Ce procédé est typiquement mis en œuvre de manière sécurisée sur le serveur 10b.

Ainsi, les moyens de traitement de données 11b du serveur 10b commencent par une étape (a) de réécriture du premier code en un deuxième code dans lequel au moins une partie dite obfusquée dudit code utilisant ladite clé secrète n'utilise qu'une seule instruction dite *mov,* qui est une instruction de déplacement non-conditionnelle dans un premier opérande de l'instruction d'un deuxième opérande de l'instruction.

En d'autres termes, le code d'origine est transformé en *mov-only* par l'utilisation d'un outil tel que *M/o/Vfuscator.*

A noter que le deuxième code peut être directement compilé depuis un premier code qui ne serait pas en un langage d'assemblage.

Dans une étape (b) suivante, est généré un troisième code correspondant au deuxième code dans lequel chaque instruction *mov* de la partie obfusquée est remplacée par une instruction dite *cmov,* qui est une instruction de déplacement conditionnel dans un premier opérande de l'instruction d'un deuxième opérande de l'instruction. A ce stade, chaque instruction cmov est une instruction réelle, c'est pourquoi l'étape (b) comprend l'ajout dans le troisième code d'au moins une instruction *cmov* factice.

Pour cela, comme expliqué, il est possible d'ajouter une pluralité d'instruction *cmov* factice pour chaque instruction *cmov* réelle, notamment en dupliquant l'instruction *cmov* réelle autant de fois qu'un objet peut prendre de valeurs.

Enfin, le procédé d'obfuscation peut comprendre une étape (c) de transmission à l'équipement 10a du troisième code pour stockage sur des moyens de stockage 12a d'un équipement 10a en vue de l'exécution par des moyens de traitement de données 11a de l'équipement 10a pour mise en œuvre dudit algorithme cryptographique, i.e. le procédé selon le premier aspect.

*Produit programme d'ordinateur*

Selon un troisième et un quatrième aspects, l'invention concerne un produit programme d'ordinateur comprenant des instructions de code pour l'exécution (en particulier sur les moyens de traitement de données 11a, 11b de l'équipement 10a et/ou du serveur 10b) d'un procédé selon le premier ou le deuxième aspect de l'invention de mise en œuvre ou d'obfuscation d'un algorithme cryptographique à clé secrète donnée, ainsi que des moyens de stockage lisibles par un équipement informatique (une mémoire 12a, 12b de l'équipement 10a et/ou du serveur 10b) sur lequel on trouve ce produit programme d'ordinateur.

**Revendications**

1. Procédé de mise en œuvre d'un algorithme cryptographique à clé secrète donnée comprenant l'exécution par des moyens de traitement de données (11a) d'un équipement (10a) d'un code implémentant ledit algorithme cryptographique stocké sur des moyens de stockage de données (12a) de l'équipement (10a), le procédé étant **caractérisé en ce qu'**au moins une partie dite obfusquée dudit code paramétrée avec ladite clé secrète n'utilise qu'une seule instruction dite *cmov,* qui est une instruction de déplacement conditionnel dans un premier opérande de l'instruction d'un deuxième opérande de l'instruction, au moins une occurrence de ladite instruction *cmov* dans ladite partie obfusquée du code étant factice.

2. Procédé selon la revendication 1, dans lequel ladite instruction *cmov* de déplacement conditionnel dans un premier opérande de l'instruction d'un deuxième opérande de l'instruction met en œuvre :

    - soit, si une condition est vérifiée, le déplacement effectif dans le premier opérande du deuxième opérande ;
    - soit, si ladite condition n'est pas vérifiée, une simulation de déplacement dans le premier opérande du deuxième opérande ;

ladite occurrence factice de l'instruction *cmov* étant destinée à mettre en œuvre ladite simulation de déplacement dans le premier opérande du deuxième opérande lors de l'exécution normale dudit code.

3. Procédé selon la revendication 2, dans lequel ladite simulation de déplacement dans le premier opérande du deuxième opérande comprend soit le déplacement effectif dans le premier opérande du premier opérande, soit le déplacement effectif du deuxième opérande ailleurs que dans le premier opérande.

4. Procédé selon l'une des revendications 1 et 3, dans lequel chaque instruction *cmov* de déplacement conditionnel dans un premier opérande de l'instruction d'un deuxième opérande de l'instruction est exprimée à partir d'une instruction dite *mov* de déplacement non-conditionnel dans le premier opérande du deuxième opérande, encapsulée.

5. Procédé selon l'une des revendications 1 et 4, dans lequel les moyens de traitement de données (11a) mettent en œuvre un environnement d'exécution sécurisée dans lequel ledit code implémentant ledit algorithme cryptographique est exécuté, tel que l'environnement Secure Guard Extension.

6. Procédé selon l'une des revendications 1 et 5, dans lequel ladite partie de code obfusquée comprend une pluralité d'occurrences factices d'instructions *cmov* pour chaque occurrence réelle d'une instruction *cmov*.

7. Procédé selon la revendication 6, dans lequel, pour un ensemble d'une occurrence réelle et des M-1 occurrences factices correspondantes d'instructions *cmov*, correspondant à toutes les M valeurs possibles $o_i$ d'un objet noté $o$, dont une valeur attendue $r$, on a :

- pour la i-ème occurrence de l'ensemble, la condition de déplacement est « $o$ est égal à $o_i$ » ;
- l'occurence réelle est la j-ième telle que $o_j=r$ ;
- toutes les autres occurrences de l'ensemble sont des occurrences factices.

8. Procédé selon l'une des revendications 1 à 7, dans lequel ledit code est dans un langage d'assemblage des moyens de traitement de données (11a).

9. Procédé selon la revendication 8, dans lequel ledit langage d'assemblage est l'assembleur x86.

10. Procédé selon l'une des revendications 1 à 9, dans lequel ledit algorithme cryptographique est un algorithme de chiffrement symétrique, ladite partie obfusquée du code implémentant au moins un tour dudit algorithme de chiffrement symétrique.

11. Procédé d'obfuscation d'un algorithme cryptographique à clé secrète donnée représentée par un premier code informatique, comprenant la mise en œuvre par des moyens de traitement de données (11b) d'un serveur (10b) d'étapes de :

(a) réécriture du premier code en un deuxième code dans lequel au moins une partie dite obfusquée dudit code utilisant ladite clé secrète n'utilise qu'une seule instruction dite *mov*, qui est une instruction de déplacement non-conditionnelle dans un premier opérande de l'instruction d'un deuxième opérande de l'instruction ;
(b) génération d'un troisième code correspondant au deuxième code dans lequel chaque instruction *mov* de la partie obfusquée est remplacée par une instruction dite *cmov*, qui est une instruction de déplacement conditionnel dans un premier opérande de l'instruction d'un deuxième opérande de l'instruction, au moins une instruction *cmov* factice étant ajoutée.

12. Procédé selon la revendication 11, comprenant une étape (c) de transmission à l'équipement (10a) du troisième pour stockage sur des moyens de stockage (12a) d'un équipement (10a) en vue de l'exécution par des moyens de traitement de données (11a) de l'équipement (10a) pour mise en œuvre dudit algorithme cryptographique.

13. Produit programme d'ordinateur comprenant des instructions de code pour l'exécution d'un procédé selon l'une des revendications 1 à 12 de mise en œuvre ou d'obfuscation d'un algorithme cryptographique à clé secrète donnée, lorsque ledit programme est exécuté par un ordinateur.

14. Moyen de stockage lisible par un équipement informatique sur lequel un produit programme d'ordinateur comprend des instructions de code pour l'exécution d'un procédé selon l'une des revendications 1 à 12 de mise en œuvre ou d'obfuscation d'un algorithme cryptographique à clé secrète donnée.

Fig. 1

Fig. 2

```
┌ ─ ─ ─ ─ ─ ─ ─ ─ ─ ─ ─ ─ ─ ─ ─ ─ ─ ─ ─ ─ ─ ─ ┐
        Premier code
└ ─ ─ ─ ─ ─ ─ ─ ─ ─ ─ ─ ─ ─ ─ ─ ─ ─ ─ ─ ─ ─ ─ ┘
```

(a)

Réécriture uniquement en instructions *mov*

(b)

Remplacement des instructions *mov* par *cmov*

Ajout de *cmov* factices

(c)

Chargement du troisième code
Exécution

**Europäisches Patentamt**
**European Patent Office**
**Office européen des brevets**

## RAPPORT DE RECHERCHE EUROPEENNE

Numéro de la demande
EP 20 17 6724

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y,D | Sébastien Duquette: "REcon 2015 - The movfuscator (Christopher Domas)", YouTube, 16 février 2016 (2016-02-16), pages 1-2, XP054980284, Extrait de l'Internet: URL:https://www.youtube.com/watch?v=2VF_wPkiBJY [extrait le 2020-03-05] * le document en entier * ----- | 1-14 | INV. H04L9/06 H04L9/00 |
| Y,D | ASHAY RANE ET AL: "Raccoon: Closing Digital Side-Channels through Obfuscated Execution", USENIX, USENIX, THE ADVANCED COMPUTING SYSTEMS ASSOCIATION , 12 août 2015 (2015-08-12), pages 442-457, XP061024840, Extrait de l'Internet: URL:https://www.usenix.org/sites/default/files/sec15_full_proceedings_interior.pdf [extrait le 2015-08-12] * sections 4.1 and 4.2; figures 2,3 * ----- | 1-14 | |
| A,D | ADIL AHMAD ET AL: "OBFUSCURO: A Commodity Obfuscation Engine on Intel SGX", PROCEEDINGS 2019 NETWORK AND DISTRIBUTED SYSTEM SECURITY SYMPOSIUM, 24 février 2019 (2019-02-24), XP055673374, Reston, VA DOI: 10.14722/ndss.2019.23513 ISBN: 978-1-891562-55-6 * section V.B * ----- | 4 | |

DOMAINES TECHNIQUES RECHERCHES (IPC)

H04L
G06F

-/--

Le présent rapport a été établi pour toutes les revendications

| Lieu de la recherche | Date d'achèvement de la recherche | Examinateur |
|---|---|---|
| Munich | 1 octobre 2020 | Manet, Pascal |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....................................................
& : membre de la même famille, document correspondant

EPO FORM 1503 03.82 (P04C02)

**Europäisches Patentamt**
**European Patent Office**
**Office européen des brevets**

## RAPPORT DE RECHERCHE EUROPEENNE

Numéro de la demande

EP 20 17 6724

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | TILLICH STEFAN ET AL: "Protecting AES Software Implementations on 32-Bit Processors Against Power Analysis", 5 juin 2007 (2007-06-05), ROBOCUP 2008: ROBOCUP 2008: ROBOT SOCCER WORLD CUP XII; [LECTURE NOTES IN COMPUTER SCIENCE; LECT.NOTES COMPUTER], SPRINGER INTERNATIONAL PUBLISHING, CHAM, PAGE(S) 141 - 157, XP047503088, ISBN: 978-3-319-10403-4 * section 3.3 * ----- | 6,7 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 1 octobre 2020 | Manet, Pascal |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)